# EUROPEAN PATENT SPECIFICATION

(11) **EP 2 867 570 B1**
(45) Date of publication and mention of the grant of the patent: **19.10.2016**
(21) Application number: 13762242.9
(22) Date of filing: 28.06.2013
(51) Int. Cl.: F16L 37/32, F16L 37/34, F16L 37/40, F16L 37/413

(54) **QUICK ACTING MALE COUPLING FOR CONVEYING PRESSURIZED FLUIDS**
SCHNELLAGIERENDE STECKKUPPLUNG ZUM FÖRDERN VON FLÜSSIGKEITEN UNTER DRUCK
RACCORD MÂLE À ACTION RAPIDE POUR TRANSPORTER DES FLUIDES SOUS PRESSION

(30) Priority: 28.06.2012 IT MI20121136
(43) Date of publication of application: 06.05.2015
(73) Proprietor: Alfagomma do Brasil Ltda., 37.810-000 Guaranésia - MG (BR)
(72) Inventor: AZARIAS NETO, Joao, 13730 Mococa (BR); BARBINI, Maurizio, 37800 Guaxupé (BR); GENNASIO, Enrico, I-20059 Vimercate (Monza Brianza) (IT)
(74) Representative: Rapisardi, Mariacristina
(86) International application number: PCT/IB2013/055318
(87) International publication number: WO 2014/002065

(56) References cited:
- EP-A1- 0 686 801
- DE-A1- 3 509 371
- DE-A1-102005 011 601

## Description

The present invention refers to a quick acting male coupling for conveying pressurized fluids that can be utilized in agricultural or industrial applications.

More specifically, reference is made herein to a quick acting male coupling comprising a longitudinal valve body having, along its longitudinal axis, an open cavity, a shutter that is axially mobile in the cavity of the valve body in opposition to and by action of a helical spring and that can be positioned against a valve seat for closure of the passage of fluid through the cavity of the valve body, and a guide element for the shutter, pressed by the helical spring against a mechanical stop. The quick acting male coupling can be coupled to a quick acting female coupling, and the locking of one to the other is generally obtained with races of balls that can be activated by a ring nut mounted in an axially translatable manner on the female coupling.

Couplings of this sort are designed to prevent partial closure of the shutter with flow inversion and the occurrence of flow rate peaks.

These coupling must also ensure safe use for the operator and adequate reliability.

Lastly, these couplings must be capable of ensuring that thorough cleanliness is maintained in the coupling and decoupling procedures between the male coupling and the female coupling so as to prevent leakage of fluid into the environment and to prevent absorption of air in the fluid.

One of the main drawbacks reported in relation to a quick acting male coupling of the type described hereinabove consists in the fact that for the construction thereof, the opening for outflow of the fluid through the guide element is rather limited and thus limits the maximum flow rate achievable. DE102005011601, DE3509371 and EP0686801 disclose a quick acting male coupling according to preamble of claim 1.

Therefore, the technical task of the present invention is to realize a quick acting male coupling for pressurized fluids that makes it possible to eliminate the reported technical drawbacks of the prior art.

Within the scope of this technical task, one aim of the invention is to realize a quick acting male coupling for pressurized fluids that optimizes the maximum flow rate that is achievable, while ensuring safe use for the operator, adequate reliability and maintenance of clean conditions in the procedures for coupling and decoupling with a quick acting female coupling.

The technical task, as well as these and other aims, according to the present invention, are reached by realizing a quick acting male coupling for conveying fluids comprising a longitudinal valve body having, along its longitudinal axis, an open cavity, a shutter that is axially mobile in the cavity of the valve body in opposition to and by action of a helical spring and that can be positioned against a valve seat for closure of the passage of fluid through the cavity of the valve body, and a guide element for the shutter, pressed by the helical spring against a mechanical stop, wherein that said shutter comprises an axially hollow rod, and in that said guide element comprises a base, a guide pin that axially extends out from the base, and a plurality of fins for centring the guide element which surround the guide pin and extend out from the base on the same side as the guide pin, said rod being fitted on the said guide pin with the interposition of said helical spring, which is inserted in the cavity of the rod and fitted on the guide pin.

One of the principal advantages resulting from the adoption of a structure such as this for the quick acting male coupling consists in the fact that the opening for outflow of the fluid through the guide element is optimized so as to maximize the maximum flow rate achievable.

In particular, this is achieved owing to the positioning of the helical spring outside the guide pin, which makes it possible to minimize the diameter of the same guide pin.

Optimization of the opening for outflow is completed by the selection of a suitable triangular shape for the base of the guide element.

Additional characteristics of the present invention are also defined in the claims herein below.

Further characteristics and advantages of the invention will emerge more clearly from the description of a preferred, but not exclusive embodiment of the quick acting male coupling according to the invention, as illustrated by way of approximate and non-limiting example in the accompany drawings, in which:

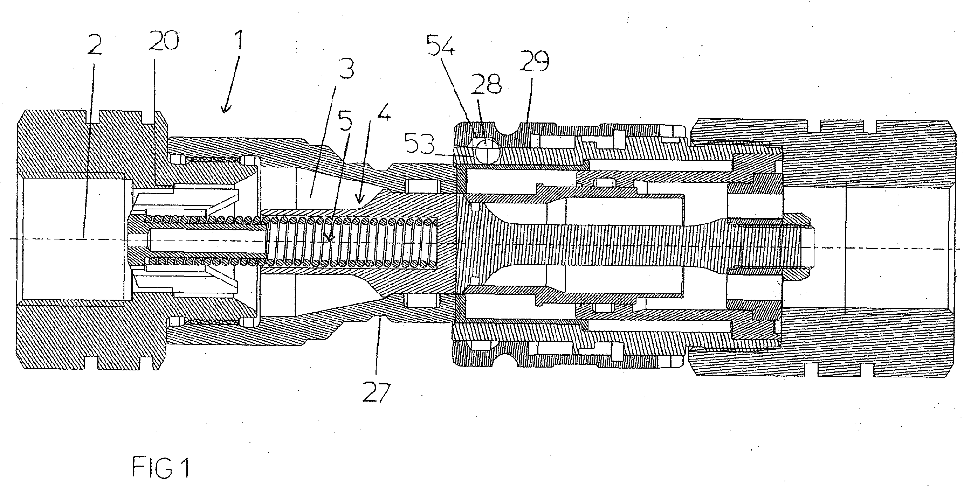

Figure 1 is an axial cross-section of the assembly comprising the quick acting male coupling and the quick acting female coupling, prior to the coupling thereof;

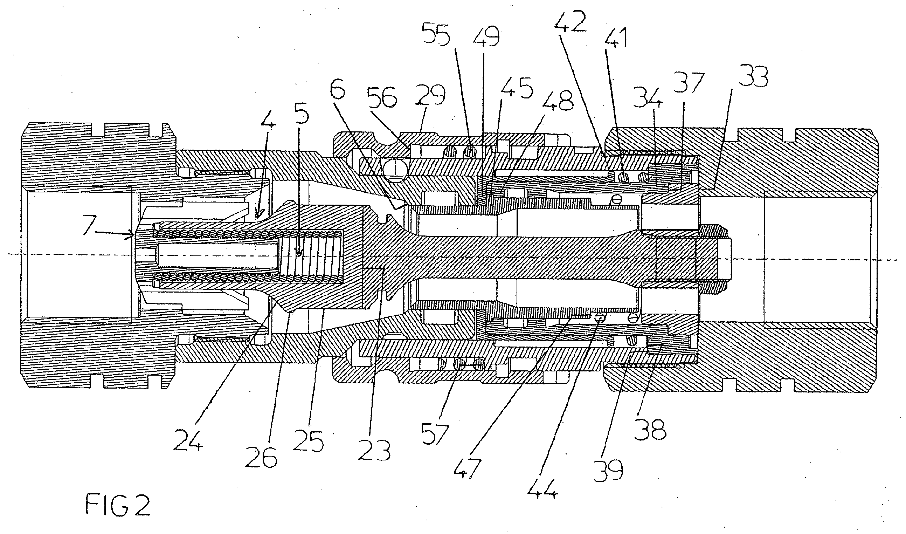

Figure 2 is an axial cross-section of the quick acting male coupling coupled in the quick acting female coupling, with the ring nut in the position for locking the coupling thereof;

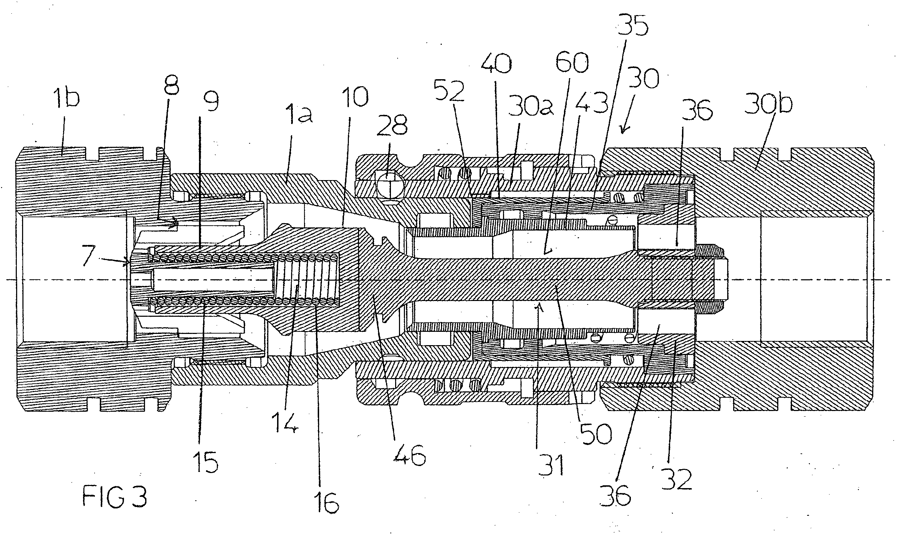

Figure 3 is an axial cross-section of the quick acting male coupling coupled in the quick acting female coupling, with the ring nut in the position for releasing the coupling thereof;

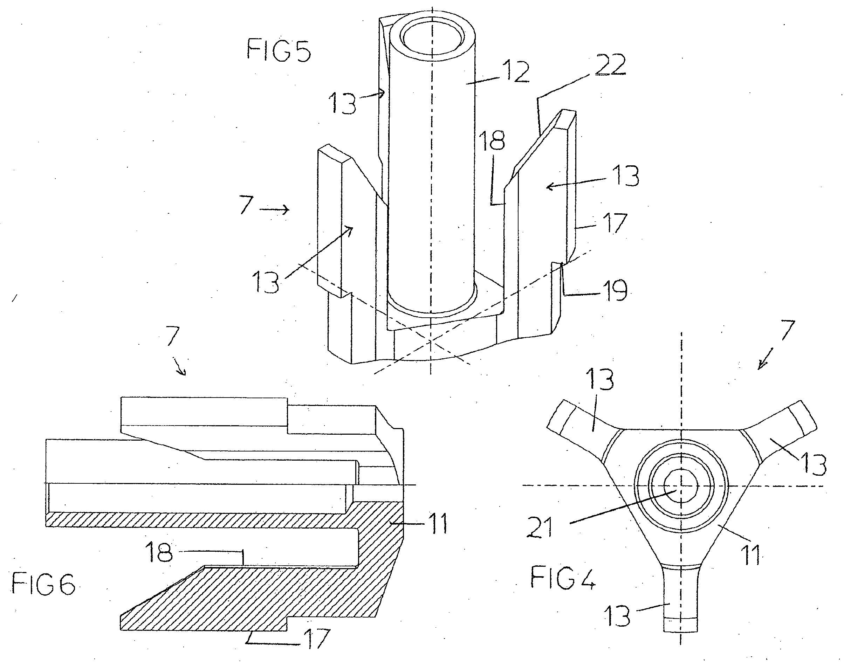

Figure 4 is a front view of the guide element;
Figure 5 is an axonometric view of the guide element;
Figure 6 is a partial cross-section of the guide element; and

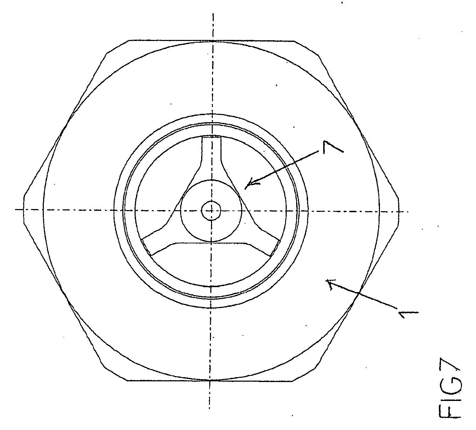

Figure 7 is a front view of the quick acting male coupling.

With reference to the figures cited hereinabove, the quick acting male coupling for conveying fluids comprises a longitudinal valve body 1 having, along its longitudinal axis 2, an open cavity 3, a shutter 4 that is axially mobile in the cavity 3 of the valve body 1 in opposition to and by action of a helical spring 5 and that can be positioned against a valve seat 6 for closure of the passage of fluid through the cavity 3 of the valve body 1, and a guide element 7 for the shutter 4, pressed by the helical spring 5 against a mechanical stop 8 preferably defined by the internal lateral surface of the valve body 1.

The valve body 1 has a modular structure comprising a first hollow part 1a that defines the valve seat 6 internally and a second hollow part 1b connecting to an external element, screwed to the first hollow part 1a and internally having the mechanical stop 8 for the guide element 7.

The shutter 4 comprises a preferably cylindrical and axially hollow rod 9 and a head 10.

The head 10 exhibits a flat surface 23 at the apex, a cylindrical lateral surface 25 having a protrusion 26 at the perimeter that can be positioned against the valve body 6, and a cone-shaped base surface 24, bevelled at 45° with respect to the axis of the rod 9, and joined to the rod 9 with a wide radius.

The guide element 7 comprises a base 11, a preferably cylindrical guide pin 12 that axially extends out from the base 11, and a plurality of fins 13 for centring the guide element 7 which circumscribe the guide pin 12 and extend out from the base 11 on the same side as the guide pin 12.

The pin 12 and the fins 13 extend out perpendicularly from the base 11.

The guide element 7 also has an axial drain passage 21 that extends through the base 11 and the pin 12 and it is designed to drain the fluid so as to prevent the occurrence of internal residual pressure levels that block the disassembly of the constituent elements of the male coupling.

The rod 9 is fitted on the guide pin 12 with the interposition of the helical spring 5, which, in particular, is inserted in the cavity 14 of the rod 9 and fitted on the guide pin 12.

In all states of deformation, the helical spring 5 has an axial length that is in any case greater than the length of the guide pin 12, as it is provided with an axial section 15 that is fitted onto the guide pin 12 and an axial section 16 that extends beyond tip of the apex of the guide pin 12.

One end of the helical spring 5 rests against the base 11 and the other end rests against the bottom of the cavity 14 of the rod 9 and the helical spring 5 operates in a state of permanent axial compression between a configuration of maximum axial extension, in which it keeps the guide element 7 against the mechanical stop 8 and the shutter 4 protracted against the valve seat 6 for closure of the passage of fluid through the cavity 3 of the valve body 1 when the male coupling is disconnected from the female coupling, and a configuration of minimum axial extension, in which it keeps the guide element 7 against the mechanical stop 8 when the shutter 4 is retracted for opening the passage of fluid through the cavity 3 of the valve body 1.

The fins 13 of the guide element 7 have a radially external edge 17 for resting against the internal lateral surface of the valve body 1 and against the mechanical stop 8, as well as radially internal edge 18 that faces the rod 9 and cooperates with the pin 12 in guiding the rod 9.

The internal lateral surface of the valve body 1 is cylindrical and has a discontinuity in the diameter forming a projecting part 20 that defines the mechanical stop 8.

The radially external edge 17 of each fin 13 correspondingly has a cylindrical-sector conformation coaxial with the internal lateral surface of the valve body 1 and a discontinuity in the diameter, defining a step 19 for resting against the projecting part 20, whereas the radially internal edge 18 of each fin 13 has a cylindrical-sector conformation coaxial with the pin 12.

Lastly, the fins 13 are tapered at the apex 22, which facilitates application of the rod 9 on the guide pin 12.

The base 11 of the guide element 7 advantageously has the shape of an equilateral triangle and a principal lying plane orthogonal to the longitudinal axis 2 of the valve body 1.

There are specifically provided three centring fins 13, each extending out from a respective vertex of the triangular base 11.

At an external cylindrical lateral surface of the part 1a of the valve body 1, the quick acting male coupling has a circumferential perimeter groove 27 in which there can be positioned balls 28 that can be activated by a ring nut 29 brought into position in an axially translatable manner by a quick acting female coupling of a known type for locking the connection with the male coupling.

More precisely, the quick acting female coupling comprises an axially hollow modular body 30 made up of a first part 30a that can be associated with the first part 1a of the modular body 1 of the quick acting male coupling and a second part 30b screwed to the first part 30a and connectable to an external element.

An axial push bar 31 with a flat head 46 is housed in a fixed manner in the modular body 30.

The push bar 31 comprises a rod 50 that is arranged coaxially in the modular body 30 and a base 32 provided with axial passages 36 for the fluid.

A first, axially hollow insert 43 fitted coaxially on the axial push bar 31 with which it delimits an interspace 60 for passage of the fluid, a second, axially hollow insert 35 fitted coaxially on the first insert 43, and a third, axially hollow insert 40 fitted coaxially on the second insert 35 are present in the modular body 30.

The base 32 of the push bar 31 engages with an internal shoulder 33 of the second part 30b of the modular body 30 and has a shoulder 37 that engages with an internal shoulder 34 of the second insert 35, which, in turn, also has an external shoulder 38 that engages with an internal shoulder 39 of the first part 30a of the modular body 30. Owing to the coupling between the first part 30a and the second part 30b of the modular body 30, the first part 30a of the modular body 30 thus secures the second insert 35 against the base 32, which is, in turn, secured against the second part 30b of the modular body 30.

The first insert 43 has an external perimeter flange 45 that is engageable with an internal perimeter flange 48 of the second insert 35 and with an internal perimeter flange at the apex 49 of the third insert 40.

The second insert 35 has an internal lateral surface for guiding the axial translation of the first insert 43 along the second insert 35 in opposition to and by action of a helical spring 44 interposed between the base 32 of the push bar 31 and an external shoulder 47 of the first insert 43.

The second insert 35 also has an external lateral surface coupled to the internal lateral surface of the third insert 40 for guiding the axial translation of the third insert 40 along the second insert 35 in opposition to and by action of a helical spring 41 interposed between an external perimeter base flange 42 of the third insert 40 and the external shoulder 38 of the second insert 35.

The first part 30a of the modular body 30 has an internal lateral surface that is coupled to the external lateral surface of the third insert 40 so as to cooperate in the guided axial translation of the third insert 40.

The first part 30a also has an internal shoulder 52 with which the external perimeter base flange 42 of the third insert is engageable.

The first part 30a has a plurality of cone-shaped seats 53 arranged along a circumference of the perimeter of the first part 30a and passing through the thickness of the wall of the first part 30a, where the balls 28 are freely housed. The ring nut 29, which is fitted on the first part 30a of the modular body 30, internally exhibits a circumferential perimeter groove 54 that can be aligned with the cone-shaped seats 53, and it can be activated in opposition to and by action of a helical spring 55 arranged between an internal shoulder 56 of the ring nut 29 and an external shoulder 57 of the first part 30a of the modular body 30.

Coupling between the quick acting male coupling and the quick acting female coupling takes place in the following manner.

Prior to coupling, the quick acting male coupling is in a configuration in which the shutter 4, being kept by the spring 5 in a position of abutment against the valve seat 6, closes the axial passage of the fluid through the male coupling.

Prior to coupling, the female coupling is in a configuration in which the first insert 43 is kept by the spring 44 in a protracted position of abutment against the back of the head 46 of the axial push bar 31, thus closing the interspace 60 that affords the axial passage of the fluid through the female coupling, whereas the third insert 40 is kept by the spring 41 in a protracted position, at which the abutment of the external flange 42 thereof is against the internal shoulder 52 of the first part 30a of the modular body 30.

When the part 1a of the modular body 1 is engaged in the part 30a of the modular body 30, the head 46 of the push bar 31 intercepts and causes the retraction of the shutter 4 in opposition to the spring 5 until the passage for the fluid through the male coupling is opened, while the head end of the part 1a of the modular body 1, as it pushes against the internal flange 49, initially brings about the retraction of the third insert 40 in opposition to the spring 41, and then owing to the engagement between the internal flange 49 and the external flange 45, also brings about the retraction of the first insert 43 in opposition to the spring 44, with the resulting opening of the interspace 60 affording passage of the fluid through the female coupling.

In order to connect the male coupling and the female coupling, the ring nut 29 must be manually retracted, overpowering the force of the spring 55, until the groove 54 is aligned with the seats 53 in such a manner that a space is created that allows for partial extraction of,the balls 28 from the seats 53 in a radial direction outwards, when the external lateral surface of the part 1a of the modular body 1, by sliding along the internal lateral surface of the part 30a of the modular body 30, intercepts the balls 28. The penetration of the male coupling in the female coupling terminates when the groove 27 is aligned with the seats 53. In this coupling configuration, the ring nut 29 is released and as a result of the extension of the spring 55, it is protracted towards the male coupling, thus diverting the groove 54 from the seats 53. The result is that, as the radial movement of the balls 28 towards the groove 54 is no longer possible, the balls 28 remain trapped between the seats 53 and the groove 27 from which they can no longer move out of unless the ring nut 29 is retracted, and they thus lock the coupling between the male coupling and the female coupling.

Therefore, in the male coupling the fluid can flow through the opening present between the guide element 7 and the part 1b of the modular body 1, and through the opening present between the shutter 4 and the part 1a of the modular body 1. The structure proposed for the quick acting male coupling according to the invention proves to be particularly advantageous in that it maximizes the flow rate of the fluid, optimizing the opening for outflow through the guide element 7.

## Claims

1. A quick acting male coupling for conveying fluids comprising a longitudinal valve body (1) having, along its longitudinal axis (2), an open cavity (3), a shutter (4) that is axially mobile in the cavity (3) of the valve body (1) in opposition to and by action of a helical spring (5) and that can be positioned against a valve seat (6) for closure of the passage of fluid through the cavity (3) of the valve body (1), and a guide element (7) for the shutter (4), pressed by the helical spring (5) against a mechanical stop (8), said shutter (4) comprising an axially hollow rod (9), said guide element (7) comprising a base (11), a guide pin (12) that axially extends out from the base (11), and a plurality of fins (13) for centring the guide element (7) which surround the guide pin (12) and extend out from the base (11) on the same side as the guide pin (12), said rod (9) being fitted on the said guide pin (12) with the interposition of said helical spring (5), which is inserted in the cavity of the rod (9) and fitted on the guide pin (12),
**characterized in that** said base (11) has the shape of an equilateral triangle and a principal lying plane orthogonal to the longitudinal axis of the valve body (1),
**in that** there are provided three centring fins (13), each extending out from a respective vertex of said triangular base (11), and
**in that** the pin (12) and the fins (13) extend out perpendicularly from the base (11).

2. The quick acting male coupling for conveying fluids according to the preceding claim, **characterized in that** said fins (13) have a radially external edge for resting against the internal lateral surface of the valve body (1) and against the mechanical stop (8), as well as a radially internal edge that faces the rod (9) and cooperates with the pin (12) in guiding the rod (9).

3. The quick acting male coupling for conveying fluids according to any one of the preceding claims, **characterized in that** said mechanical stop (8) is defined by the internal lateral surface of the valve body (1).

4. The quick acting male coupling for conveying fluids according to any one of the preceding claims, **characterized in that** the internal lateral surface of the valve body (1) is cylindrical and has a discontinuity in the diameter forming a projecting part that defines the mechanical stop (8).

5. The quick acting male coupling for conveying fluids according to the preceding claim, **characterized in that** the radially external edge of each fin (13) has a cylindrical-sector conformation coaxial with the internal lateral surface of the valve body (1) and a discontinuity in the diameter, defining a step for resting against the mechanical stop (8).

6. The quick acting male coupling for conveying fluids according to any one of the preceding claims, **characterized in that** the pin (12) has a cylindrical conformation, and the radially internal edge of the fins (13) has a cylindrical-sector conformation coaxial with the pin (12).

7. The quick acting male coupling for conveying fluids according to any one of the preceding claims, **characterized in that** each fin (13) is tapered at the apex.

8. The quick acting male coupling for conveying fluids according to any one of the preceding claims, **characterized in that** the guide element (7) has an axial drain passage (21) that extends through the base (11) and the pin (12).

9. The quick acting male coupling for conveying fluids according to any one of the preceding claims, **characterized in that** said valve body (1) has a modular structure comprising a first hollow part (1a) internally having the said seat for the shutter (4), and a second hollow part (1b) connecting to an external element, screwed to the first hollow part (1a) and internally having the mechanical stop (8) for the guide element (7).

10. The quick acting male coupling for conveying fluids according to any one of the preceding claims, **characterized in that** the shutter (4) has a head with a flat surface at the apex, and a base surface, bevelled at 45° with respect to the axis of the rod (9), and joined to the rod with a wide radius (9).

11. A combination of the quick acting male coupling for conveying fluids according to any one of the preceding claims and a quick acting female coupling having a ring nut (29) that is translatable for the activation of at least one race of balls (28) in an external circumferential groove of the valve body (1) of the male coupling for locking the connection with the female coupling.

## Patentansprüche

1. Schnellagierende Steckkupplung zum Fördern von Flüssigkeiten, umfassend einen Längsventilkörper (1), aufweisend entlang dessen Längsachse (2) einen offenen Hohlraum (3), einen Verschluss (4), der axial im Hohlraum (3) des Ventilkörpers (1) im Gegensatz zu und durch die Wirkung einer Schraubenfeder (5) mobil ist und der gegen einen Ventilsitz (6) positioniert werden kann, um das Durchströmen von Flüssigkeit durch den Hohlraum (3) des Ventilkörpers (1) zu verschließen, und ein Führungselement (7) für den Verschluss (4), gedrückt von der Schraubenfeder (5) gegen einen mechanischen Anschlag (8), wobei der Verschluss (4) einen axial hohlen Stab (9) umfasst, wobei das Führungselement (7) eine Basis (11), einen Führungszapfen (12), der sich axial aus der Basis (11) herausragend erstreckt, und eine Vielzahl an Rippen (13) umfasst, um das Führungselement (7) zu zentrieren, das den Führungszapfen (12) umgibt (12) und sich aus der Basis (11) auf derselben Seite wie der Führungszapfen (12) herausragend erstreckt, wobei der Stab (9) am Führungszapfen (12) angebracht ist und die Schraubenfeder (5), die in den Hohlraum des Stabs (9) eingefügt und am Führungszapfen (12) angebracht ist, dazwischen gesetzt ist, **dadurch gekennzeichnet, dass** die Basis (11) die Form eines gleichschenkligen Dreiecks aufweist und eine Hauptliegeebene, die rechtwinklig zur Längsachse des Ventilkörpers (1) angeordnet ist, dadurch, dass drei Zentrierrippen (13) bereitgestellt sind, von denen sich jede außerhalb des jeweiligen Scheitels der dreieckigen Basis (11) erstreckt, und dadurch, dass sich der Zapfen (12) und die Rippen (13) senkrecht aus der Basis (11) herausragend erstrecken.

2. Schnellagierende Steckkupplung zum Fördern von Flüssigkeiten nach dem vorhergehenden Anspruch, **dadurch gekennzeichnet, dass** die Rippen (13) eine radial außenseitige Kante aufweisen, um gegen die innenseitige Seitenoberfläche des Ventilkörpers (1) und gegen den mechanischen Anschlag (8) anzuschlagen, sowie eine radial innenseitige Kante, die dem Stab (9) zugewandt ist und mit dem Zapfen (12) beim Führen des Stabs (9) kooperiert.

3. Schnellagierende Steckkupplung zum Fördern von Flüssigkeiten nach einem der vorhergehenden Ansprüche, **dadurch gekennzeichnet, dass** der mechanische Anschlag (8) durch die innenseitige Seitenoberfläche des Ventilkörpers (1) definiert ist.

4. Schnellagierende Steckkupplung zum Fördern von Flüssigkeiten nach einem der vorhergehenden Ansprüche, **dadurch gekennzeichnet, dass** die innenseitige Seitenoberfläche des Ventilkörpers (1) zylindrisch ist und eine Diskontinuität im Durchmesser aufweist, formend einen hervorspringenden Teil, der den mechanischen Anschlag (8) definiert.

5. Schnellagierende Steckkupplung zum Fördern von Flüssigkeiten nach dem vorhergehenden Anspruch, **dadurch gekennzeichnet, dass** die radial außenseitige Kante einer jeden Rippe (13) eine Zylindersektorbeschaffenheit aufweist, koaxial zur innenseitigen Seitenoberfläche des Ventilkörpers (1), und eine Diskontinuität im Durchmesser, definierend eine Stufe zum Abstützen gegen den mechanischen Anschlag (8).

6. Schnellagierende Steckkupplung zum Fördern von Flüssigkeiten nach einem der vorhergehenden Ansprüche, **dadurch gekennzeichnet, dass** der Zapfen (12) eine zylindrische Beschaffenheit aufweist und die radial innenseitige Kante der Rippen (13) eine Zylindersektorbeschaffenheit, koaxial zum Zapfen (12), aufweist.

7. Schnellagierende Steckkupplung zum Fördern von Flüssigkeiten nach einem der vorhergehenden Ansprüche, **dadurch gekennzeichnet, dass** eine jede Rippe (13) am Scheitel verjüngt ist.

8. Schnellagierende Steckkupplung zum Fördern von Flüssigkeiten nach einem der vorhergehenden Ansprüche, **dadurch gekennzeichnet, dass** das Führungselement (7) einen axialen Abflussdurchgang (21) aufweist, der sich durch die Basis (11) und den Zapfen (12) erstreckt.

9. Schnellagierende Steckkupplung zum Fördern von Flüssigkeiten nach einem der vorhergehenden Ansprüche, **dadurch gekennzeichnet, dass** der Ventilkörper (1) eine modulare Struktur aufweist, umfassend einen ersten hohlen Teil (1a), der innenseitig den ersten Sitz für den Verschluss (4) aufweist, und einen zweiten hohlen Teil (1b), der sich mit einem externen Element verbindet, das am ersten hohlen Teil (1a) angeschraubt ist und innenseitig den mechanischen Anschlag (8) für das Führungselement (7) aufweist.

10. Schnellagierende Steckkupplung zum Fördern von Flüssigkeiten nach einem der vorhergehenden Ansprüche, **dadurch gekennzeichnet, dass** der Verschluss (4) einen Kopf mit einer flachen Oberfläche am Scheitel und eine Basisoberfläche aufweist, die bei 45° zur Achse des Stabs (9) abgeschrägt und mit dem Stab mit einem weiten Radius (9) zusammengefügt ist.

11. Kombination aus der schnellagierenden Steckkupplung zum Fördern von Flüssigkeiten nach einem der vorhergehenden Ansprüche und einer schnellagierenden Kupplungsbuchse, aufweisend eine Ringmutter (29), die zur Aktivierung von mindestens einem Kugellager (28) in einer außenseitigen Umfangsnut des Ventilkörpers (1) der Steckkupplung verschiebbar ist, um die Verbindung mit der Kupplungsbuchse festzuspannen.

## Revendications

1. Raccord mâle à action rapide pour transporter des fluides comprenant un corps de soupape longitudinal (1) ayant, le long de son axe longitudinal (2), une cavité ouverte (3), un obturateur (4) étant axialement mobile dans la cavité (3) du corps de soupape (1) en opposition à, et par l'action d'un ressort hélicoïdal (5) et pouvant être positionné contre un siège de soupape (6) pour la fermeture du passage du fluide à travers la cavité (3) du corps de soupape (1), et un élément de guidage (7) pour l'obturateur (4), pressé par le ressort hélicoïdal (5) contre une butée mécanique (8), ledit obturateur (4) comprenant une tige axialement creuse (9), ledit élément de guidage (7) comprenant une base (11), un goujon de guidage (12) se prolongeant axialement depuis la base (11), et une pluralité d'ailettes (13), pour centrer l'élément de guidage (7), qui entourent le goujon de guidage (12) et se prolongent depuis la base (11) du même côté que le goujon de guidage (12), ladite tige (9) étant montée sur ladit goujon de guidage (12) avec l'interposition dudit ressort hélicoïdal (5) étant inséré dans la cavité de la tige (9) et monté sur le goujon de guidage (12), **caractérisé en ce que** ladite base (11) a la forme d'un triangle équilatéral et un plan d'appui principal orthogonal à l'axe longitudinal du corps de soupape (1), **en ce que** trois ailettes de centrage (13) sont prévues, chacune se prolongeant depuis un sommet respectif de ladite base triangulaire (11), et **en ce que** le goujon (12) et les ailettes (13) se prolongent perpendiculairement depuis la base (11).

2. Raccord mâle à action rapide pour transporter des fluides selon la revendication précédente, **caractérisé en ce que** lesdites ailettes (13) possèdent un bord radialement externe pour se mettre en appui contre la surface latérale interne du corps de soupape (1) et contre la butée mécanique (8), ainsi qu'un bord radialement interne faisant face à la tige (9) et qui coopère avec le goujon (12) en guidant la tige (9).

3. Raccord mâle à action rapide pour transporter des fluides selon l'une quelconque des revendications précédentes, **caractérisé en ce que** ladite butée mécanique (8) est définie par la surface latérale interne du corps de soupape (1).

4. Raccord mâle à action rapide pour transporter des fluides selon l'une quelconque des revendications précédentes, **caractérisé en ce que** la surface latérale interne du corps de soupape (1) est cylindrique et possède une discontinuité au niveau du diamètre formant une partie en saillie définissant la butée mécanique (8).

5. Raccord mâle à action rapide pour transporter des fluides selon la revendication précédente, **caractérisé en ce que** le bord radialement externe de chaque ailette (13) possède une forme en secteur cylindrique coaxiale à la surface latérale interne du corps de soupape (1) et une discontinuité au niveau du diamètre définissant un pas pour se mettre en appui contre la butée mécanique (8).

6. Raccord mâle à action rapide pour transporter des fluides selon l'une quelconque des revendications précédentes, **caractérisé en ce que** le goujon (12) possède une forme cylindrique et le bord radialement interne des ailettes (13) possède une forme en secteur cylindrique coaxiale à le goujon (12).

7. Raccord mâle à action rapide pour transporter des fluides selon l'une quelconque des revendications précédentes, **caractérisé en ce que** chaque ailette (13) se rétrécie au sommet.

8. Raccord mâle à action rapide pour transporter des fluides selon l'une quelconque des revendications précédentes, **caractérisé en ce que** l'élément de guidage (7) possède un passage d'évacuation axial (21) qui se prolonge à travers la base (11) et le goujon (12).

9. Raccord mâle à action rapide pour transporter des fluides selon l'une quelconque des revendications précédentes, **caractérisé en ce que** ledit corps de soupape (1) possède une structure modulaire comprenant une première partie creuse (1a) ayant en son sein ledit siège pour l'obturateur (4), et une seconde partie creuse (1b), reliant un élément externe, vissée à la première partie creuse (1a) et ayant en son sein la butée mécanique (8) pour l'élément de guidage (7).

10. Raccord mâle à action rapide pour transporter des fluides selon l'une quelconque des revendications précédentes, **caractérisé en ce que** l'obturateur (4) possède une tête dotée d'une surface plate au sommet, et une surface de base biseautée à 45° par rapport à l'axe de la tige (9) et jointe à la tige à un grand rayon (9).

11. Combinaison du raccord mâle à action rapide pour transporter des fluides selon l'une quelconque des revendications précédentes et d'un raccord femelle à action rapide ayant un écrou à boucle (29) pouvant translater pour l'activation d'au moins un roulement à billes (28) dans une rainure périphérique externe du corps de soupape (1) du raccord mâle pour verrouiller le raccordement au raccord femelle.
